# EUROPEAN PATENT SPECIFICATION

(11) **EP 2 657 871 B1**
(45) Date of publication and mention of the grant of the patent: **22.07.2015**
(21) Application number: 13164801.6
(22) Date of filing: 23.04.2013
(51) Int. Cl.: G06F 21/00, G06F 21/30, G06F 21/33, G06F 21/35, G06F 21/57

(54) **Secure configuration of mobile application**
Sichere Konfiguration einer mobilen Anwendung
Configuration sécurisée d'une application mobile

(30) Priority: 23.04.2012 US 201213453221
(43) Date of publication of application: 30.10.2013
(60) Divisional application: 14154959.2
(73) Proprietor: SAP SE, 69190 Walldorf (DE)
(72) Inventor: El Khoury, Paul, 69190 Walldorf (DE); Lechner, Sami, 69190 Walldorf (DE); Schneider, Jürgen, 69190 Walldorf (DE)
(74) Representative: Richardt Patentanwälte PartG mbB

(56) References cited:
- US-A1- 2010 241 836
- US-B1- 7 308 718

## Description

### BACKGROUND

Unless otherwise indicated herein, the approaches described in this section are not prior art to the claims in this application and are not admitted to be prior art by inclusion in this section.

Mobile applications ("apps") running on mobile computing devices such as smart phones and tablet devices are typically downloaded by users from public application stores ("appstore") available on the Internet. The proliferation of mobile computing devices and their level of computing capabilities have made such devices viable alternatives as remote clients to backend systems. For example, an organization may have several business application systems that support the organizations. Mobile computing devices allow user of the organization (e.g., sales people) to access these backend systems remotely.

Client-side applications for mobile devices can be distributed through an appstore channel just like any other mobile app. Business apps, however, typically require an amount of configuration which app generally do not require. For example, after download and installation on the mobile computing device, a business app may need to be configured with information about the organization's servers ("backend servers"), resource address, and port (typically in the form of a Uniform Resource Locator, URL) and any other additional app-specific configuration information, such as user interface settings, security policy information, and so on. For non-technical users, such configuration details can be difficult to enter manually into the app, time-consuming, error-prone, and thus pose an impediment to broad and fast adoption of any mobile apps the organization may want to push out.

In addition, the integrity and authenticity of such configuration information is crucial for the secure operation of an app and to protect against misuse of personal data, identity, and confidential data processed by the app. For example, if the configuration information is somehow attacked or hacked, the user may inadvertently configure an app to connect to a malicious server without the user's knowledge. When the user enters their login information (e.g., username and password), the hacker will be given information allowing them to break into the real servers in the organization.

### SUMMARY

The present invention aims to provide an improved method of configuring an application program and a corresponding system.

The underlying problem of the invention is solved by the features of the independent claims. Embodiments of the invention are given in the dependent claims.

A 'mobile computing device' as understood herein comprises a smartphone, tablet computer, notebook computer or laptop computer having an operating system, such as iOS, Android or Windows Phone and a wireless communication interface.

The term 'configuration data' as understood herein comprises a uniform resource locator (URL) that can be used for establishing an internet session between a web browser of a mobile computing device and a server computer system in accordance with the TCP/IP protocol. If the URL comprises 'http' or 'https' no port number needs to be indicated in the configuration data as the port number is implicit, i.e. port 80 for http and port 443 for https. If the URL does not contain http or https, the port number needs to be indicated in the URL. The configuration data may comprise additional data.

A 'secure network connection' as understood herein comprises a network connection that is established via a private network, such as an intranet, a virtual private network (VPN), or a public network, such as the internet. The security of the network connection may be established using cryptographic techniques, such as symmetric and/or asymmetric cryptography, for example https or another secure messaging method.

A 'challenge code' as understood herein comprises a random value, such as a pseudo random number or a true random number that has a sufficient entropy. The challenge code can be generated by means of a software program or by means of a hardware implemented random number generator, that may provide a binary symmetric source.

A 'verification value' as understood herein comprises a code that may be utilized for verifying the authenticity and integrity of the configuration data. Depending on the implementation it may also be used for verifying that a user is in receipt of a correct challenge code that matches the verification value. If the challenge code and the verification value are transmitted to the user via separate communication channels it can be verified that the user who received the challenge code is the same as the user who received the verification value. For example, the verification value is a message authentication code that has been generated by means of the challenge code such as by concatenating configuration data and the challenge code and calculating a hash value from the concatenation. If the configuration data and the verification value is received over one communication channel and the challenge code is received via another communication channel by the same user the verification can be performed by recalculating the verification value using the configuration data on the challenge code by the mobile computing device of the user. If the verification value received together with the configuration data and the verification value calculated by the mobile computing device match, verification is deemed to be established.

A 'custom URL scheme' as understood herein comprises a URL scheme that is resolved locally by the mobile computing device. For example, an application program is registered in a registry of the operating system of the mobile computing device under an application program specific custom URL scheme such that the application program may be invoked by means of the custom URL scheme, such as by entering the custom URL scheme into a browser program. Further, one application program running on the mobile computing device may communicate with another application program running on the same mobile computing device using the custom URL scheme of that other application program. For example, a custom URL scheme may be implemented in accordance with the iOS operating system, cf. iOS App Programming Guide: Advanced App Tricks, http://developer.apple.com.

Embodiments of the present invention are particularly advantageous as a both secure and flexible tool is provided to corporate users for utilizing smartphones for corporate applications, such as connecting a smartphone to a company's secure IT infrastructure, such as the company's application and/or database servers. A user may download an application program, i.e. a so called app, from a server computer, such as an 'app shop', and install the app on his or her mobile computing device. For coupling the downloaded and installed app to a company's IT infrastructure, such as a database server, the app needs to be configured in an additional configuration step which is in contrast to apps which are commonly utilized for private applications in order to enable the coupling only for authorized users in a secure way and to ensure that the app is coupled to the correct server of the company's IT infrastructure.

The configuration of the app is performed in a secure way such that only authorized users can gain access to the company's IT infrastructure. For this purpose a secure network connection is established to the server computer of the company that provides the required configuration data and the verification value. The server computer may be operated by the company or it may be in the cloud. The respective challenge code is provided to the user via another communication channel, e.g. by displaying the challenge code on a web page or sending the challenge code via SMS. Before the configuration of the app is executed the verification value needs to be verified by means of the challenge code on the mobile computing device. Only if verification is successful, the configuration can be executed.

In accordance with an embodiment of the invention the configuration data is encrypted by the server computer of the company using the challenge code as a symmetric key. Alternatively, the symmetric key is derived from the challenge code, such as by using the challenge code as a seed value, such as in accordance with the PKCS#5 standard. Only the encrypted configuration data is transmitted via the secure network connection without a need for the verification value. Alternatively, the challenge code and the verification value are encrypted by means of the symmetric key for additional security. In the latter case, the encrypted configuration data together with the verification value are transmitted via the secure network connection. The mobile computing device uses the challenge code that is received via another communication channel to decrypt the configuration data which is a prerequisite for the ensuing verification of the verification value. This is particularly advantageous as it provides an additional level of security without having to utilize asymmetric encryption and without key management.

In accordance with an embodiment of the invention the configuration data and the verification value are transmitted to the mobile computing device of the user by means of an email message attachment. Another possibility is to utilize an http re-direct response whereby the configuration data and the verification value are contained in the URL contained in the re-direct response to identify the URL to which the re-direct is to be performed and which implements a custom URL scheme under which the application program or the optional configuration app is registered. Still another option is to utilize a http re-direct response where the configuration data and the verification value are contained in a MIME-type attachment which requires that the application program to be configured or the optional configuration app has registered itself locally in the operating system of the mobile computing device for the MIME-type attachment.

The term 'application program' as used herein comprises a so called app that runs under an operating system, such as Apple iOS, Android or Windows Phone. In particular the application program may comprise a configuration program module that is started by invoking the application program. Alternatively, the configuration program module may be implemented as a separate application program that is invoked for configuring the app.

The US 2010/0241836 A1 discloses a computing platform having an attribute that is configurable by a remote system, the computing platform storing a first verifier for verifying that a message is from a trusted remote source and being operable to: acquire a second verifier from a trusted remote source, including by verifying the second verifier using the first verifier, the second verifier being usable for verifying that a message is from a remote configuration system that is trustable to configure the attribute; acquire a configuration setting from the remote configuration system, including by verifying the configuration setting using the second verifier; and configure the attribute according to the configuration setting.

The US 2010/0241836 A1 further discloses a method of configuring an attribute of a computing platform, including: receiving a signature verification key and a signature of the signature verification key generated using a signing key of a trusted remote source; verifying, using a pre-installed signature verification key of a trusted remote source, that the received signature was generated by a signing key of a trusted remote source and accepting that the received signature verification key belongs to a trustable remote configuration system; receiving a configuration setting and a signature of the configuration setting; verifying, using the received signature verification key, that the signature was generated by a signing key of a trustable remote configuration system; and configuring an attribute of the computing platform using the received configuration setting.

The US 7308718 B1 discloses a server and a method for operating the same. The server is employed for configuring P-C devices through a communications network. Records associated with the devices are stored in the server. On initial power up of one such P-C device, the P-C device automatically generates a request for configuration thereof to the server through the communications network. This request includes coded information resulting from encrypting at least an identifier, e.g., a serial number, identifying the P-C device, or alternatively from cryptographically signing at least part of the request. In response to such a request, the server locates a record associated with the P-C device, and verifies the identity of the P-C device based on the coded information. The record includes second information concerning a device configuration specified by the customer. Only when the identity of the P-C device is verified, does the server provide through the communications network to the P-C device information objects, e.g., software components and/or data, for realization of the specified configuration based on the second information.

### BRIEF DESCRIPTION OF THE DRAWINGS

Fig. 1 illustrates an arrangement of components in accordance with the present disclosure.
Fig. 1A illustrates an alternative arrangement of components in accordance with the present disclosure.
Fig. 2 shows a portal interface that an application server may present to a user.
Fig. 3 shows a display that a mobile computing device may present to a user.
Fig. 4 illustrates an example of processing that may be performed by the application server.
Fig. 5 illustrates an example of processing that may be performed by the mobile computing device.
Fig. 6 shows a system block diagram of a mobile computing device in accordance with the present disclosure.
Fig. 7 shows a system block diagram of an application server in accordance with the present disclosure.
Fig. 8 shows a block diagram in accordance with an embodiment of the present invention,
Fig. 9 shows a block diagram of a further embodiment in accordance with the present invention.

### DETAILED DESCRIPTION

In the following description, for purposes of explanation, numerous examples and specific details are set forth in order to provide a thorough understanding of the present disclosure. It will be evident, however, to one skilled in the art that the present disclosure as defined by the claims may include some or all of the features in these examples alone or in combination with other features described below, and may further include modifications and equivalents of the features and concepts described herein. Like or identical elements of the embodiments described below are designed by identical reference numerals throughout the description.

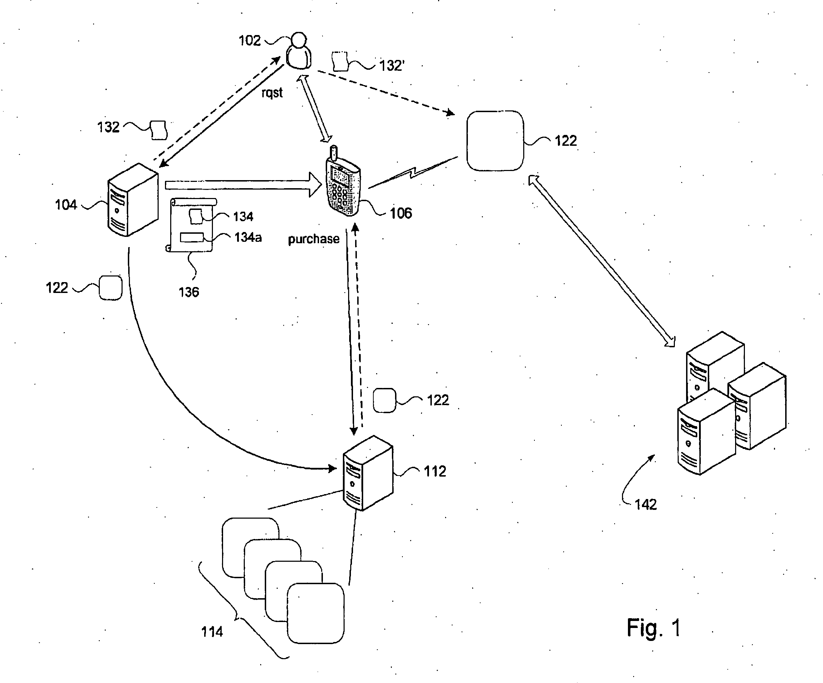

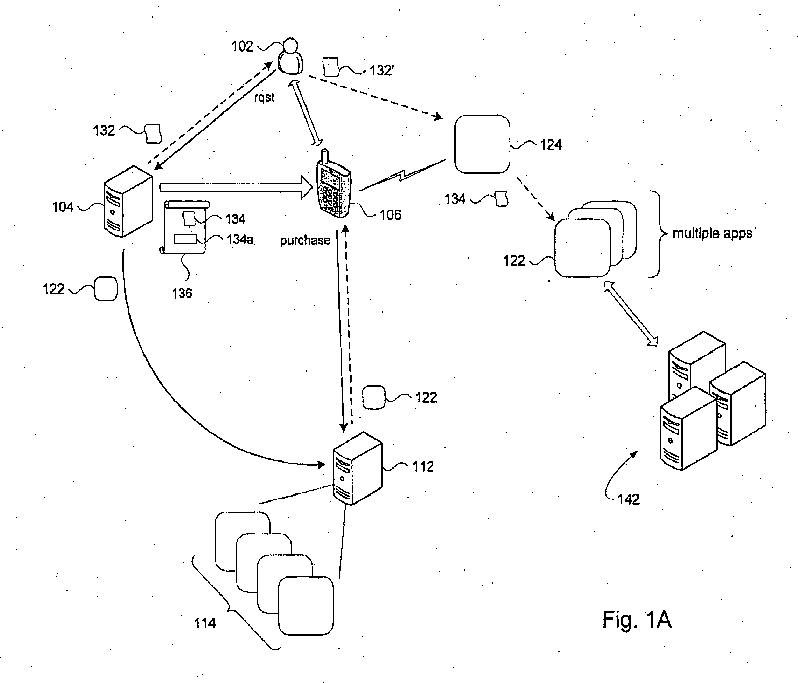

Fig. 1 shows a typical arrangement for configuring an app in accordance with embodiments of the present disclosure. User 102 represents a user in the organization. The user 102 may have a mobile computing device 106 (e.g., smart phone, computer tablet, and so on) that they use for conducting business on behalf of the organization; e.g., a sales person, a procurement specialist in manufacturing, etc.

The organization may provide and support an application server 104 to provide apps (e.g., app 122) that execute on the user's mobile computing device 106. The application server 104 may upload the app 122 to an appstore server 112 (e.g., Apple^{®} Appstore) which hosts a library 114 of apps for downloading to mobile computing devices such as mobile computing device 106. The organization may provide apps to facilitate planning and scheduling vacations, to review customer records or sales orders, to access customer accounting information, to access production data, and so on. The apps developed for the organization are typically intended to facilitate access to the organization's data stored in the organization's backend servers 142.

The user 102 may interact with the appstore server 112 to purchase the app 122. In some embodiments, the app 122 may be a free download. For example, in the case of an organization wanting to distribute the app to its employees, the app 122 is likely to be free, and so "purchasing" simply means the user 102 downloading the free app from the appstore server 112 to their mobile computing device 106.

The user 102 may interact with the application server 104 to inform the application server that they want to configure an app 122 that they currently have or are planning to install on their mobile computing device 106. For example, configuring the app 122 may involve providing configuration data to the app so that the app can communicate with one or more servers 142 of the organization. In some embodiments, the user 102 makes a request to the application server 104, and in response the application server may provide the user with a challenge code 132. In addition, the application server 104 may send configuration data 134 and a verification value 134a to the user 102 via a communication 136.

When the user 102 retrieves the communication 136 using their mobile computing device 106, the mobile computing device may launch the app 122. As will be explained in more detail below, the user 102 may provide a challenge code 132' to the app 122, which may then verify the configuration data 134. If the configuration data 134 is deemed to be verified, then the app 122 may use the configuration data to conduct communications with the organization's server(s) 142.

Referring to Fig. 1A, in some embodiments, a configuration app 124 may be installed on the user's mobile computing device 106. When the user 102 retrieves the communication 136 with their mobile computing device 106, the configuration app 124 may be launched to verify the configuration data 134. If the configuration data 134 is deemed to be verified (e.g., using the user-provided challenge code 132'), then the configuration app 124 may provide the configuration data 134 to the app 122, which may then conduct communications with the organization's server(s) 142. In some embodiments, the configuration data 134 may provide information that allows the configuration app 124 to configure multiple apps.

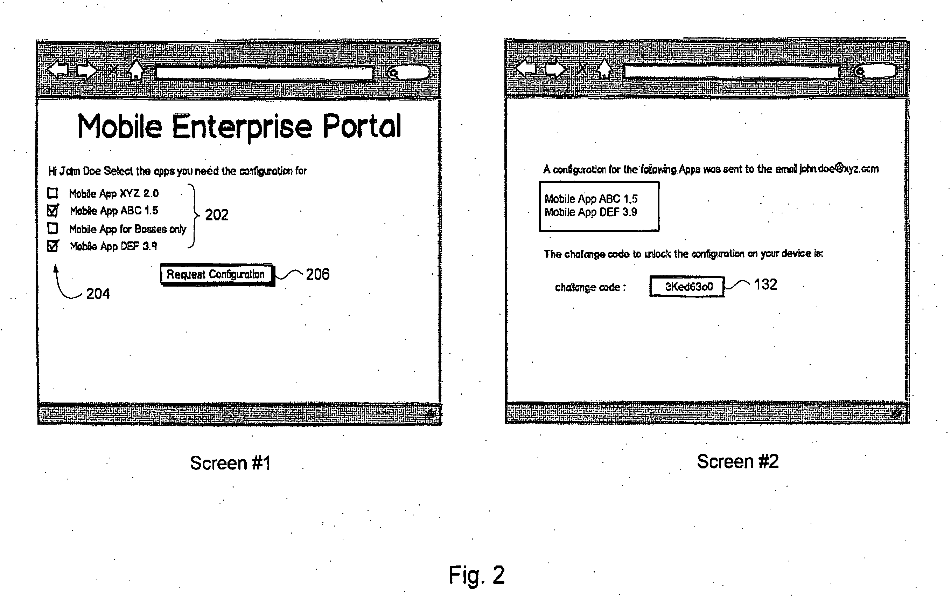

Fig. 2 shows illustrative examples of a portal interface that the application server 104 may present to the user 102. The application server 104 may be accessed in any of several ways. For example, the application server 104 may be accessed over a local communication network such as a local area network. As another example, the user 102 may access the application server 104 from the Internet using a web browser; e.g., using HTTPS if security is desired.

In Screen # 1 of Fig. 2, the portal interface may present to the user 102 a list 202 of apps that the application server 104 supports. For example, the list 202 may include apps that can be downloaded from the appstore server 112. The user 102 may select one or several apps that they want to configure on their mobile computing device 106. For example, a set of check boxes 204 can allow the user 102 to select the apps of interest. The user 102 may then indicate they have completed the selection process, for example, by clicking the "Request Configuration" button 206.

In Screen #2, the portal interface may confirm the selection made by the user 102. In accordance with the present disclosure, the portal interface may display a challenge code 132 to the user 102. The user 102 may then write down the challenge code 132 (e.g., on a piece of paper), the user may store the challenge code on their mobile computing device 106 (e.g., using a notepad program or by copying the challenge code into the cut&pasteboard of the mobile computing device 106), and so on.

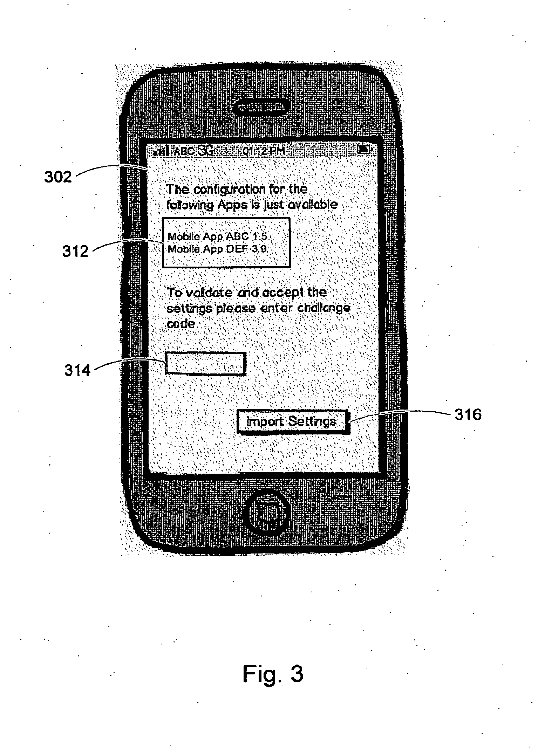

Fig. 3 shows an illustrative example of a display 302 that may be presented to the user 102 on their mobile computing device 106, when the user retrieves the communication 136 sent by the application server 104. The display 302 shown in Fig. 3 is an example of a display that the configuration app 124 (Fig. 1A) may display when it is launched. In some embodiments, the user's selection of apps made in Fig. 2 may produce configuration data 134 suitable for configuring the selected apps. In addition, the display 302 may show to the user 102 a list 312 of the user's selected apps that will be configured by the configuration data 134. The display 302 may include an input box 314 for receiving the challenge code 132' from the user 102. A button 316 allows the user 102 to begin the verification process. The functionality of the configuration app 124 may be included in the app 122 to be configured such that a separate configuration app is not necessary.

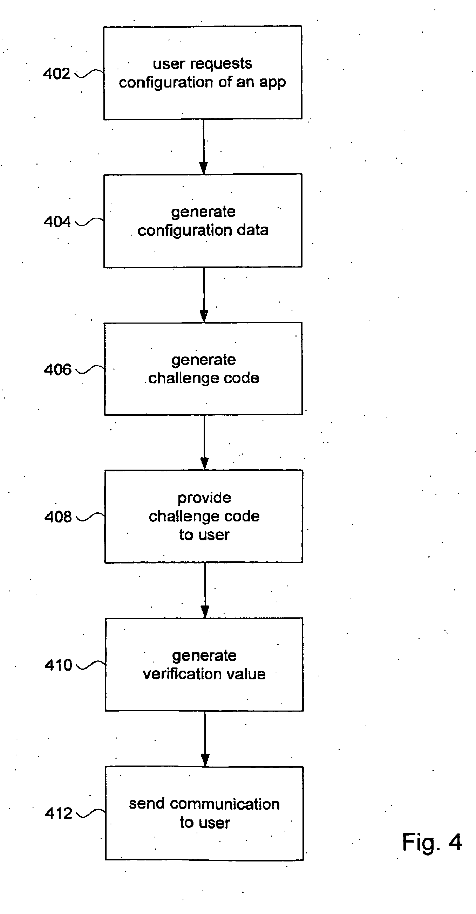

Additional details will now be discussed in the context of processing in accordance with the principles of the present disclosure. Referring to Fig. 4, in a step 402, user 102 may initiate configuration processing for an app on their mobile device 106 using the application server 104. The user 102 may specify one or more apps 122 to be configured; for example, by using an interface such as illustrated in Fig. 2.

In a step 404, the application server 104 may generate configuration data 134 for the one or more apps 122 specified in step 402. The specific information that comprises the configuration data will vary from one app to another. The configuration data 134 may include information that will allow the app 122 to establish a communication link to the servers 142 in the organization, such as server name, IP address, port numbers, and so on. The configuration data 134 may include data security measures such as encryption and decryption keys. The configuration data 134 may configure the app 122 according to who the user 102 is; for example, certain features may be enabled or disabled for a given user. And so on.

In a step 406, the application server 104 may generate a challenge code 132. The challenge code 132 may be a randomly generated number, a random text string, a random string of alphanumeric characters, and in general may include any random string of printable characters. The challenge code 132 may be provided to the user 102 (step 408), for example, by displaying the challenge code on the portal interface shown in Fig. 2. The user 102 may then write down the challenge code 132 to be used later on or copy the challenge code into the cut&pasteboard of the mobile computing device 106 for temporary storage.

In a step 410, the application server 104 may generate a verification value 134a (Fig. 1) using the challenge code 132 that the application server generated in step 406 and the configuration data 134 generated in step 404. In an embodiment, for example, a hash-based message authentication code (HMAC) may be computed by concatenating the configuration data 134 with the challenge code 132, and feeding the concatenated string into a secure hash function to produce the verification value 134a. Typical secure hash functions include SHA 1 or SHA-256. It will be appreciated of course that the verification value 134a may be produced using any of several known secure hash functions performed on the combination of configuration data 134 and the challenge code 132. Moreover, any deterministic and reproducible combination of the configuration data 134 and the challenge code 132 may be used as input to the secure hash function. The configuration data 134 and the challenge code 132 may be "combined" in any way and order. The configuration data 134 and the challenge code 132 may be concatenated (disclosed above), the configuration data 134 and the challenge code 132 may be encrypted and the resulting ciphers may be combined, and so on. It is noted that the secure hash function used for generating the verification value 134a is a "one-way" function. In other words, applying the same secure hash function to the same combination of configuration data 134 and challenge code 132 will always lead to the same verification value 134a, but the configuration data 134 and the challenge code 132, in particular, cannot be recovered from the verification value 134a

In a step 412, a communication 136 is sent to the user 102. In accordance with principles of the present disclosure, the communication 136 comprises the configuration data 134 and the verification value 134a. In some embodiments, the communication may be an email message having an attachment. It will be appreciated that other suitable forms of sending the communication 136 to the user 102 may be used. As will be explained in more detail below, the challenge code 132 provided to the user in step 408 may then be used to verify the configuration data 134, but the challenge code 132 itself is not contained in communication 136.

As indicated in the foregoing discussion, in some embodiments there is a one-to-one association between the challenge code 132 and a user; the one user requests a configuration, receives the challenge code, and as will be explained below uses that challenge code to verify configuration data for app 122 on their mobile computing device. In some situations however, it may be more efficient to allow a single challenge code 132 to be used for multiple users. For example, suppose an initial roll-out of an app is targeted for deployment to a large group of users in an organization. A single user (e.g., a department manager) may log onto the application server 104, initiate a request for configuration of the app to be rolled out, and receive a single challenge code 132 (step 408). The application server 104 may then generate the verification value 134a, and the communication 136 comprising the configuration data 134 and the verification value 134a. The application server 104 may be provided with a list of users who are to receive the communication 136 (step 412). The department manager may then distribute the challenge code 132 to the group of users. Each user may then download the app and using the common challenge code 132 verify the configuration data 134 for that app. In this way, only one single challenge code and one verification value need to be generated by the application server 104, rather that generating as many challenge codes and verification values as there are users in the large group of users.

In accordance with principles of the present disclosure, the communication channel over which the application server 104 provides the challenge code 132 to the user 102 is separate from the communication channel over which the communication 136 is delivered to the user. The communication channel over which the challenge code 132 is provided to the user 102 may be deemed to be a trusted channel. For example, the user 102 may interact directly with the application server 104, which is presumably accessed over the organization's intranet, to receive the challenge code 132. The user 102 may receive the challenge code 132 from a colleague (e.g., a department manager may distribute the challenge code to a group of users), and so on. The communication 136, on the other hand, is provided to the user 102 separately, for example, by emailing the communication in an attachment. By using different communication channels to provide the challenge code 132 separately from how the communication 136 is delivered, an additional level of security is provided since it may be difficult to attack or otherwise hack each communication channel. For example, the challenge code can be communicated to the user by sending an SMS to the mobile computing device 106.

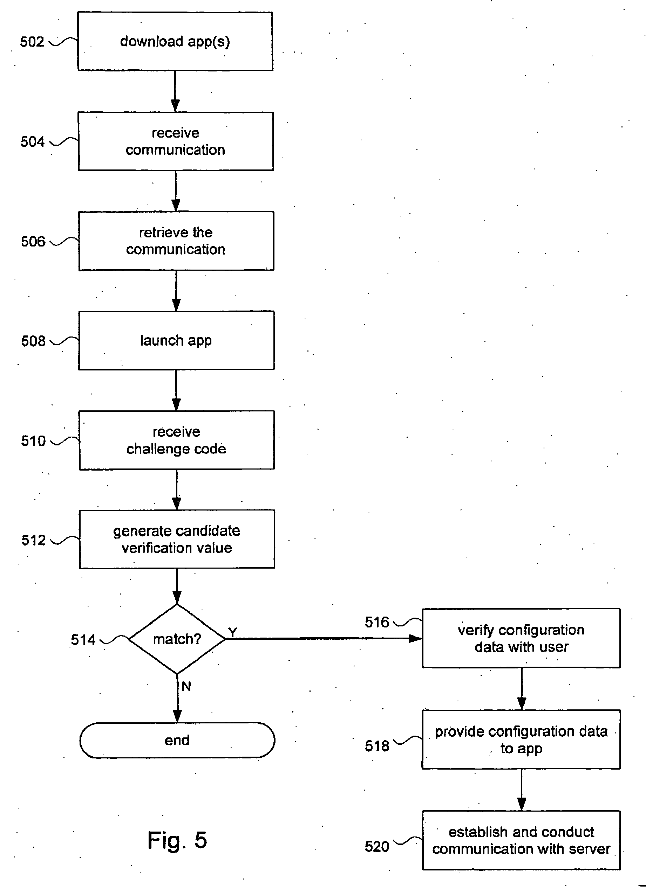

Referring to Fig. 5, configuration processing in the mobile computing device 106 in accordance with principles of the present disclosure is explained. In a step 502, at some time, the user 102 will download the app(s) 122 for which configuration processing is needed. The app 122 may be purchased before the user 102 logs onto the application server 104 to initiate configuration processing, or after the user has logged onto the application server. In the "large group" scenario, the application server 104 may generate the challenge code 132 and send out a communication 136 (step 412) before they even know about the app 122.

In a step 504, the user 102 may receive the communication 136 sent by the application server 104 (step 412). For example, if the communication 136 is an email, the user 102 may be notified that an email has arrived in their mailbox. If the communication 136 is not by email but by means of a http re-direct response, the target app to be configured or the configuration app is launched via the re-direct URL pointing to the custom URL scheme of the app to be launched.

In a step 506, the user 102 may retrieve the communication 136 using their mobile computing device. For example, the user 102 may open an email and open an attachment which contains the communication 136. In a step 508, an app that is associated with the attachment may be launched when the user 102 opens the attachment. For example, when an attachment has a file type "PDF", a PDF reader application that is associated with file type PDF can be launched in order to read the attachment. Likewise, the communication 136 has a file type. In some embodiments, the communication 136 may be associated with the app 122 ("target app") that is to be configured, in which case the target app is launched when the user 102 opens the attachment. In another embodiment, the communication 136 may be associated with a configuration app 124 (Fig. 1A), in which case the configuration app is launched.

In a step 510, the app (whether the target app or the configuration app) reads in the data comprising the communication 136. The app may display an input box (e.g., 314, Fig. 3) on the mobile computing device 106 allowing the user 102 to enter the challenge code 132 provided to the user in step 408.

In a step 512, the app (whether the target app or the configuration app) generates a candidate verification value using the configuration data 134 received in the communication 136 and the challenge code received in step 510. In a step 514, if the candidate verification value matches the verification value 134a provided in the communication 136, then the configuration data 134 is deemed to be verified, and processing may proceed to a step 516.

In step 516, the app (whether the target app or the configuration app) may display the configuration data 134 received in the communication 136 to the user 102 on the mobile computing device 106. The user 102 may be prompted to accept or deny the configuration data. This step may be performed as an added measure of security, giving the user 102 the final word whether or not to proceed with using the configuration data 134 to configure the target app.

In a step 518, the now verified communication data 134 may be provided to the target app. In an embodiment where the steps 510-516 are performed by the target app, then the target app simply configures itself with the configuration data 134.

In an embodiment where the steps 510-516 are performed by the configuration app, then the configuration app may provide the configuration data 134 to the target app. The specific details on how the configuration data 134 is provided to the target app depends on the services provided by the operating system (OS) of the mobile computing device 106, and the conventions adopted for providing configuration data to an app. For example, each app may designate a directory or a file in the file system for storing its configuration data. The configuration app 124 may store the configuration data 134 in those files. The OS may provide interprocess communication services, allowing the configuration app 124 to send the configuration data 134 to the target app using the OS's interprocess communication services. For example, this can be accomplished using the http re-direct response implementation option as described below in greater level of detail.

In a step 520, the target app is now properly configured for communication with the backend servers 142 of the organization. The configuration data 134 may include configuring the target app for secured transmission and reception of data, enabling or disabling certain functionality depending who the user is, and so on.

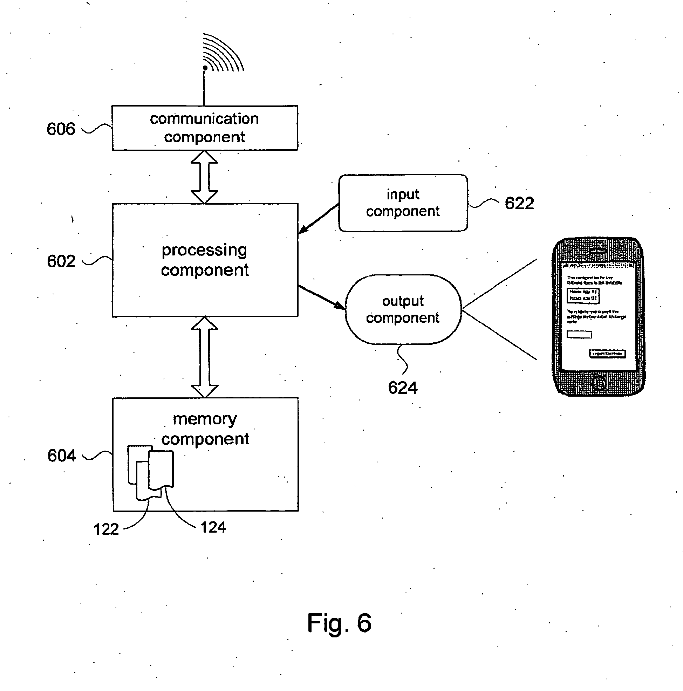

A particular embodiment of a mobile computing device 106 in accordance with the present disclosure is illustrated by the block diagram in Fig. 6. The mobile computing device 106 may comprise a processing component 602 such as a microcontroller. A memory component 604 may comprise static memory (e.g., flash random access memory, RAM) and/or dynamic memory (dynamic random access memory, DRAM). The memory component 604 may store data and apps that can be executed by the mobile computing device 106. For example, the memory component 604 may store app 122, and in some embodiments may store configuration app 124. The apps may cause the processing component 602 to performs steps such as set forth in Fig. 5. A communication component 606 may provide a suitable wireless communication channel to the organization's backend servers 142. The communication component 606 may support several wireless communication formats, including for example, Bluetooth, 3G, and so on.

The mobile computing device 106 may include an input component 622 and an output component 624. In some embodiments, the input component 622 and the output component 624 may be integrated in one component such as a touch-sensitive display. In other embodiments, they may be separate. In accordance with the present disclosure, the processing component 602 may present certain displays on the output component 624. For example, when the processing component 602 executes app 122 or configuration app 124, the output component 624 may present the display illustrated in Fig. 3.

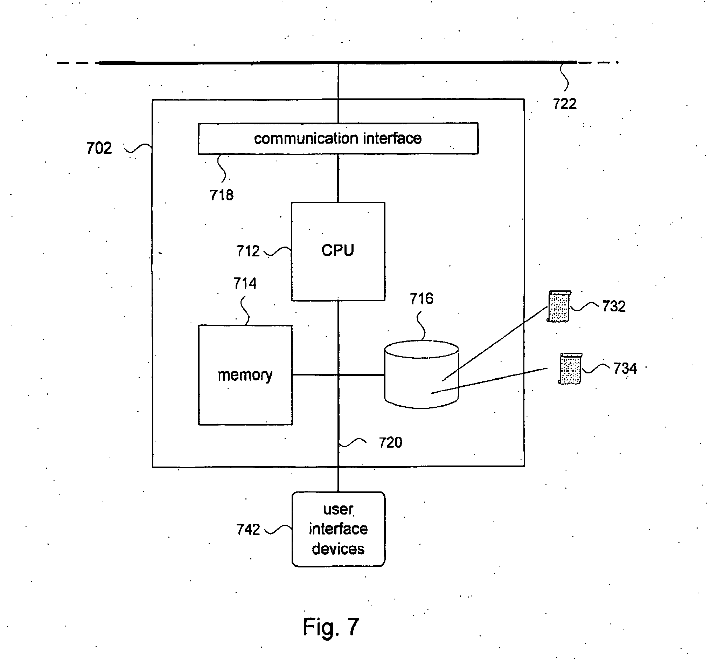

A particular embodiment of the application server 104 in accordance with the present disclosure is illustrated by the block diagram of Fig. 7, showing a high level block diagram of a computer system 702 configured to operate in accordance with the present disclosure. The computer system 702 may include a central processing unit (CPU) or other similar data processing component. The computer system 702 may include various memory components. For example, the memory components may include a volatile memory 714 (e.g., random access memory, RAM) and a data storage device 716. A communication interface 718 may be provided to allow the computer system 702 to communicate over a communication network 722, such as a local area network (LAN), the Internet, and so on. An internal bus 720 may interconnect the components comprising the computer system 702.

The data storage device 716 may comprise a non-transitory computer readable medium having stored thereon computer executable program code 732. The computer executable program code 732 may be executed by the CPU 712 to cause the CPU to perform steps of the present disclosure, for example the steps set forth in Fig. 4. The data storage device 716 may store data structures 734 such as object instance data, runtime objects, and any other data described herein. In some embodiments, the data storage device 716 may store the configuration data 134 and the verification value 134a that is to be sent to the mobile computing device.

A user (e.g., user 102) may interact with the computer system 702 using suitable user interface devices 742. They may include, for example, input devices such as a keyboard, a keypad, a mouse or other pointing device, and output devices such as a display.

All systems and processes discussed herein may be embodied in program code stored on one or more non-transitory computer-readable media. Such media may include, for example, a floppy disk, a CD-ROM, a DVD-ROM, a Flash drive, magnetic tape, and solid state Random Access Memory (RAM) or Read Only Memory (ROM) storage units. It will be appreciated that embodiments are not limited to any specific combination of hardware and software. Elements described herein as communicating with one another are directly or indirectly capable of communicating over any number of different systems for transferring data, including but not limited to shared memory communication, a local area network, a wide area network, a telephone network, a cellular network, a fiber-optic network, a satellite network, an infrared network, a radio frequency network, and any other type of network that may be used to transmit information between devices. Moreover, communication between systems may proceed over any one or more transmission protocols that are or become known, such as Asynchronous Transfer Mode (ATM), Internet Protocol (IP), Hypertext Transfer Protocol (HTTP) and Wireless Application Protocol (WAP).

### Advantages and Technical Effect

The present disclosure facilitates provisioning and consumption of required initial configuration data for mobile apps in a way which is simple and easy to use, an important consideration for non-technical users. At the same time, it provides means to verify the authenticity and integrity of this initial configuration data by means of a secret (namely, the challenge code) known only to an authorized user (or authorized group of users), thereby considerably reducing the risk of misuse. An easy-to-use and secure onboarding and initial configuration of mobile apps significantly increases adoption and usage of mobile apps generating business value.

The above description illustrates various embodiments of the present disclosure along with examples of how aspects of the present disclosure may be implemented. The above examples and embodiments should not be deemed to be the only embodiments, and are presented to illustrate the flexibility and advantages of the present disclosure as defined by the following claims. Based on the above disclosure and the following claims, other arrangements, embodiments, implementations and equivalents will be evident to those skilled in the art and may be employed without departing from the spirit and scope of the disclosure as defined by the claims.

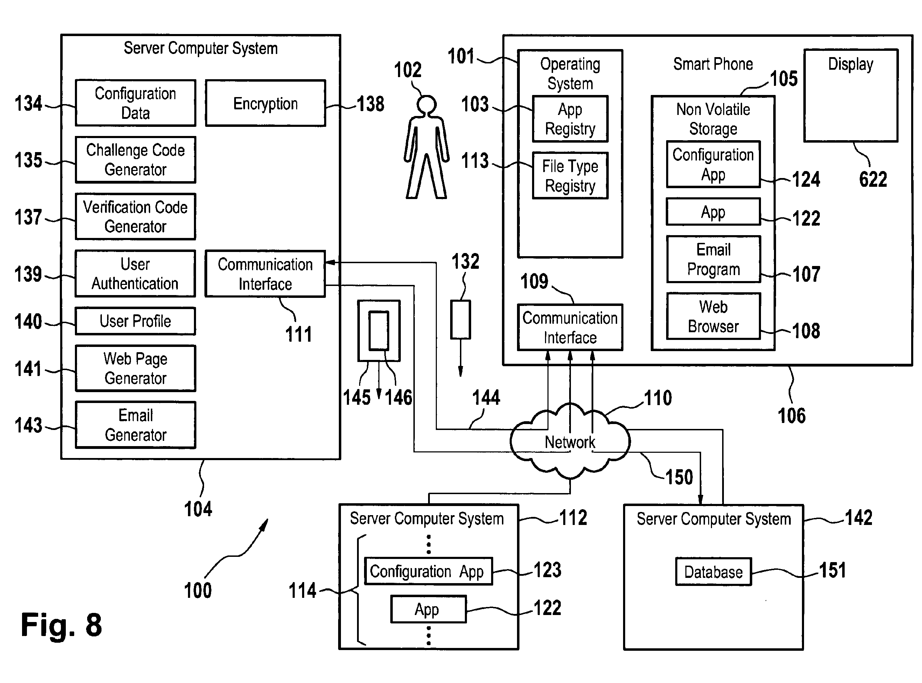

Fig. 8 shows a data processing system 100 comprising a mobile computing device 106, such as a smartphone. The mobile computing device 106 has a user interface, such as a touch sensitive display 622 that serves both for input and output. The mobile computing device 106 has an operating system 101 that implements a registry for the application programs that are installed on the mobile computing device 106. For example, each installed application is registered in the registry by means of a custom URL scheme that identifies a given app on the mobile computing device 106. In addition, the operating system 101 may implement a file type registry 113 where the file types that can be processed by a given app are registered. For example, clicking on a file that is stored on the mobile computing device 106 and that has a file type which is registered for a given app may automatically start that app. Depending on the implementation, one or more file types are registered for the configuration app 124 or - especially in the absence of a configuration app 124 - for the target app 122 to be configured.

The mobile computing device 106 has non-volatile storage 105 for storing apps, in particular the app 122. The app 122 is the target app to be configured. An additional configuration app 124 is also stored in the non-volatile storage 105. The configuration app 124 implements a configuration program module for configuring the app 122. Alternatively, the configuration program module forms an integral part of the app 122 such that a separate configuration app is not required.

Further, an email program 107 for receiving email messages with attachments and a web browser 108 are stored in the non-volatile storage 105.

The mobile computing device 106 has at least one communication interface 109 for coupling the mobile computing device 106 to a network 110, such as the internet and/or a company's intranet. The communication interface 109 may be an interface to a digital cellular mobile telecommunications network that enables the establishment of connections using the TCP/IP protocol, such as the establishment of an internet session using http or https and the transmission of email messages. On another communication layer, i.e. the so-called signaling layer in the case of GSM, the communication interface 109 may enable the reception of SMS-messages.

The server computer system 104 has a respective communication interface 111 for coupling to the communication interface 109 via the network 110. The server computer system 104 stores the configuration data 134 and has a challenge code generator 135 for generating the challenge code. For example, the challenge code generator is implemented as a pseudo random or true random number generator. The server computer system 104 has a verification value generator 137 that may be implemented by a program module that is executable to generate the verification value 134a (cf. Fig. 1 and Fig. 1A).

The server computer system has an encryption module 138 for encryption of the configuration data 134. The encryption may be performed using the challenge code 132 using symmetric encryption, by asymmetric encryption or otherwise.

The server computer system 104 has a user authentication component 139 for authentication of users, such as user 102. For example user authentication may be performed by means of a user ID/password combination, biometric authentication and/or other authentication means.

The server computer system 104 has a database component 140 for storing a user profile for each registered user, such as for user 102. The user profile of a given user may contain a communication address for electronic communication with that user, such as an email address for sending an email to the mobile computing device 106 and/or a telephone number for sending an SMS message to the mobile computing device 106.

The server computer system 104 has a webpage generator 141 for generating web pages, such as screens #1 and #2 as shown in Fig. 2 and an email generator 143. The email generator 143 is a program module that generates an email to be sent to the email address of the user that requests the configuration with an email attachment that contains the configuration data 134 and the verification value 134a. Instead of an email generator 143 an SMS generator may be utilized to send the the configuration data 134 and the verification value 134a to the user 102. In the latter case this may be done by sending a binary SMS that contains the configuration data 134 and the verification value 134a. Alternatively the challenge code is sent by SMS, not the configuration data 134 and the verification value 134a.

In operation, the user 102 starts the web browser 108 and enters the URL of the app store server 112 that is implemented by a server computer system. The user selects the app 122 and the corresponding configuration app 124 for downloading and installation on the mobile computing device 106. Installation is performed by registering the app 122 and the configuration app 124 in the app registry 103 using the custom URL scheme of the app 122 and the custom URL scheme of the configuration app 124. For the configuration app 124 a predefined file type is registered in the file type registry 113.

Next, the user 102 enters the URL of the application server 104 into web browser 108 such that a secure network connection 144 is established via the network 110 such as by means of the https protocol. Alternatively, the secure network connection 144 is established via an intranet rather than via the network 110 or via a virtual private network to provide security for the secure network connection 144.

The user 102 needs to authenticate against the application server 104 that is implemented by a server computer system, such as by entering his or her username and password combination into the user authentication component 139 via the connection 144. After successful user authentication the webpage generator 141 generates a webpage for the user's entry of his or her request for configuring the app 122 analogous to screen #1 as shown in Fig. 2. By clicking the 'request configuration' button 206 the user 102 may request configuration of the app 122. In response the challenge code 132 is generated by the challenge code generator 135. The challenge code 132 is transmitted from the application server 104 via the connection 144 to the mobile computing device 106 and displayed by means of the web browser 108 on the display 622.

In addition the email generator 143 reads the configuration data 134 and triggers the verification value generator 137 to generate a verification value 134a such as by concatenating the configuration data 134 and the challenge code 132 and calculating a message authentication code on the concatenation, such as by calculating a hash value for the concatenation using a predefined hashing algorithm. The email generator 143 generates an email to the email address of the user 102 that is stored in that user's user profile in database component 140 and an email attachment that contains a file comprising the configuration data 134 and the verification value 134a. As an option, the configuration data 134 is encrypted by the encryption module 138, such as by symmetric encryption using the challenge code 132 as a symmetric key or as a starter or seed value for calculating a symmetric key. In this instance the email attachment contains only the encrypted configuration data 134 for providing additional security. For example the symmetric key which is securely derived from the challenge code, e.g. according to the PKCS#5 standard. Depending on the implementation, the configuration data 134 is encrypted using the symmetric key and send to the user without a verification value as the verification of the configuration data 134 is performed by decrypting the received configuration data 134 using the challenge code or both the configuration data 134 and the verification value 134a are encrypted by means of the symmetric key to provide an additional layer of security.

The resultant email 145 with the email attachment 146 is then sent from the application server 104 to the email program 107 of the mobile computing device 106.

The attachment 146 of the email 145 has the predefined file type that is registered in the file type registry 113 for the configuration app 132. When the user 102 clicks on the attachment 146 this invokes the configuration app 124. The configuration app 124 prompts the user 102 for entry of the challenge code 132 that had previously been displayed on the touch sensitive display 622.

The configuration app 132 uses the challenge code 132- that has been entered by the user to generate the verification value 134a' using the same algorithm as the application server 104 by concatenating the configuration data contained in the attachment 146 with the challenge code 132' and calculating the message authentication code. If the message authentication code calculated by the mobile computing device 106 matches the verification value 134a contained in the attachment 146 verification is deemed successful.

If the configuration data 134 has been encrypted by means of the encryption module 138 using the challenge code 132, the configuration app 124 uses the challenge code 132' that has been entered by the user for symmetric decryption of the configuration data 134 before the decrypted configuration data 134 is concatenated with the challenge code 132'. This provides an additional level of security as interception of the email 145 is worthless for an attacker as the email 145 does not contain the challenge code 132 that would be required for decrypting of the configuration data 134.

Upon successful verification the configuration app 124 invokes the app 122 by means of the custom URL scheme of the app 122 and provides the configuration data 134 to the app 122 such that configuration is complete.

When the user clicks on app 122 after configuration is complete, the app 122 uses the URL contained in the configuration data 134 to establish an internet session 150 with one of the back end servers 142, such as for establishing a database session with database 151. This may require prior authorization of the user 102 against the backend server 142. As an alternative an app group mechanism is utilized for grouping the configuration app 124 and the app 122 in order to communicate the configuration data 134 such as by putting the configuration data 134 into a known file location to which only the group of apps has access.

As a further alternative the configuration program module that is implemented by the configuration app 124 is comprised within the app 122 itself such that an additional configuration app is not required. In this instance the app 122 itself is invoked when the user clicks on the email attachment 146.

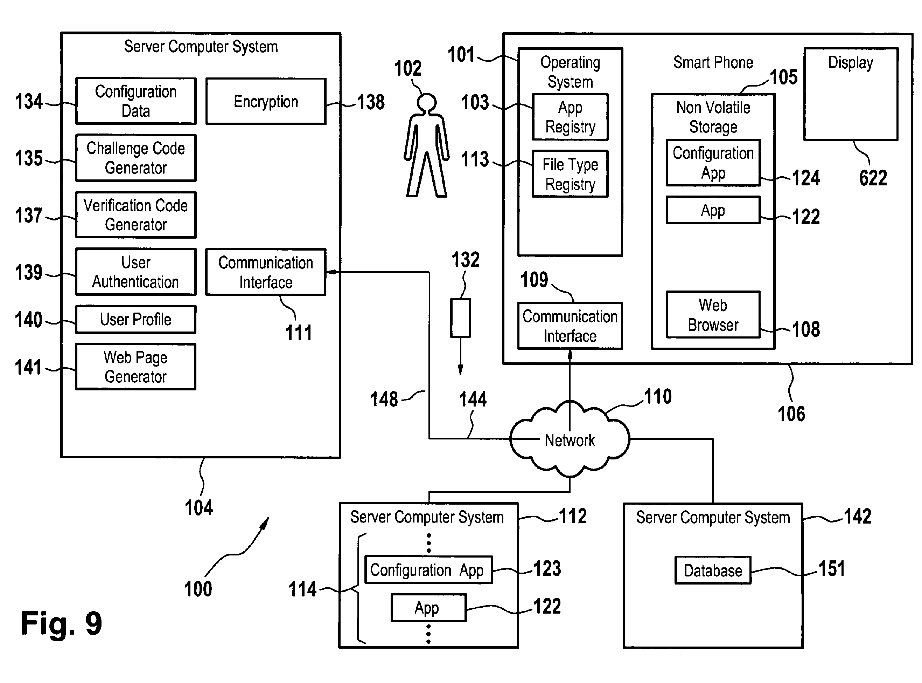

Fig. 9 shows an alternative embodiment of the data processing system 100. In contrast to the embodiment of Fig. 8 the configuration data 134 and the verification value 134a are not communicated by means of an email but by a re-direct response. The user authentication and the transmission of the challenge code 132 via the secure network connection 144 may be performed as in the embodiment of Fig. 8. Next, the user requests the provision of the configuration data 134 from the application server 104 via the secure network connection 144. In response, the webpage generator 141 generates a re-direct for the web browser 108 that contains the custom URL scheme of the configuration app 124, the configuration data 134 and the verification value 134a.

In response to the re-direct received from the application server 104 the web browser 108 invokes the configuration app 124 using the custom URL scheme of that configuration app 124 and communicates the configuration data 134 and the verification value 134a to the configuration app 124 to start the verification and configuration process on the mobile computing device 106. Alternatively, if the app 122 comprises the configuration program module, the custom URL scheme contained in the re-direct is the custom URL scheme of the app 122.

It is to be noted that the challenge code is transmitted via a communication channel that is constituted by the network connection 144, the touch sensitive display 622 and the user 102, as the challenge code is displayed on the touch sensitive display and then entered by the user 102 at a later point of time or retrieved from the cut&pasteboard by the user. In contrast, transmission of the configuration data and the verification value, if any, does only involve the network connection. As a consequence, the transmission of the challenge code and the transmission of the configuration data/verification value is performed via two different communication channels in this embodiment.

As a further alternative the re-direct response does contain an MIME-type attachment that is analogous to the email attachment 146.

### List of Reference Numerals

- 100: data processing system
- 101: operating system
- 102: user
- 103: app registry
- 104: application
- 105: non-volatile storage
- 106: mobile computing device
- 107: email program
- 108: web browser
- 109: communication interface
- 110: network
- 111: communication interface
- 112: app store server
- 113: file type registry
- 122: app
- 124: configuration app
- 132: challenge code
- 134a: verification value
- 135: challenge code generator
- 137: verification value generator
- 138: encryption module
- 139: user authentication component
- 140: database component
- 141: webpage generator
- 143: email generator
- 144: secure network connection
- 142: backend server
- 145: email
- 146: attachment
- 148: secure network connection
- 150: internet sensor
- 151: database

## Claims

1. A computer-implemented method of configuring an application program (122) of a mobile computing device (106), the method comprising:
- establishing a secure network connection (144) between the mobile computing device and a server computer system (104),
- authenticating a user of the mobile computing device against the server computer system (104) via the secure network connection,
- receiving a configuration request via the secure network connection from the mobile computing device by the server computer system, the configuration request being indicative of a user's (102) request for configuring the application program,
- in response to the configuration request:
• generating a challenge code (132) by the server computer system,
• sending the challenge code via the secure network connection (144) to the mobile computing device,
• sending configuration data (134) and a verification value (134a) from the server computer system to the mobile computing device via a communication channel (145; 148) being different from the secure network connection (144),
wherein the following steps are performed by the mobile computing device upon receipt of the configuration data and the verification value:
• starting a configuration program module,
• prompting the user to enter the challenge code via a user interface (622) by the configuration program module,
- in response to the user's entry of the challenge code, verifying the configuration data using the challenge code that has been entered by the user and the verification value received via the communication channel by the configuration program,
- upon verification of the configuration data, configuring the application program using the configuration data by the configuration program module.

2. The method of claim 1, the configuration data comprising at least a uniform resource locater of an additional server computer system (142) and optionally a port number of the additional server computer system, wherein the following additional steps are executed after the configuration of the application program has been performed:
- establishing an additional secure network connection (150) between the mobile computing device and the additional server computer system using the URL and optional port number contained in the configuration data,
- authenticating the user of the mobile computing device against the additional server computer,
- establishing a database connection between the application program and a database (151) of the additional server computer system by the additional secure network connection upon successful authentication of the user.

3. The method of claim 1 or 2, the server computer system (104) comprising a user registration database (139) for storing user registration information, the user registration information comprising reference data for authenticating the user against the service computer system and an address for establishing the additional communication channel (145) for sending the configuration data and the verification value to the mobile computing device, wherein in response to the configuration request and after successful authentication of the user against the server computer system, the server computer system retrieves the address of the user from the user registration database whereupon the configuration data and the verification value is sent to the user's address via the additional communication channel.

4. The method of claim 3, wherein the address is an email address and the configuration data and the verification value are sent from the server computer system to the mobile computing device by means of an email message (145) or the address is a telephone number of the mobile computing device, wherein the configuration data and the verification value are sent from the server computer system to the mobile computing device by means of an SMS message, such as a binary SMS message.

5. The method of any one of the preceding claims 1, 2 or 3, wherein sending the challenge code via the secure network connection (144) to the mobile computing device is performed by sending an SMS message.

6. The method of any one of the preceding claims, further comprising:
- in response to the configuration request and upon successful authentication:
• retrieval of the configuration data and the verification value by the server computer system,
• sending a response to the configuration request via the further secure network connection to the browser program (108) of the mobile computing device, the response containing the configuration data and the verification value and a re-direct to a custom URL scheme identifying the configuration program module ,
• the browser program executing the redirect such that the configuration program module is invoked.

7. The method of any one of the preceding claims, wherein the configuration data is encrypted by the server computer system (104) using a symmetric key, wherein the symmetric key is the challenge code (132) or the symmetric key is derived from the challenge code, wherein only the encrypted configuration data is transmitted via the secure network connection (144) and wherein the configuration data is decrypted by the mobile computing device upon entry of the challenge code (132') via the input component (622) of the mobile computing device (106).

8. The method of anyone of the preceding claims comprising the following steps performed on the mobile computing device:
receiving a first communication (136) that includes configuration data (134) for at least a first mobile application (122) and a verification value (134a), the verification value generated from a combination of the configuration data and a first challenge code;
receiving a challenge code (132') from a user of the mobile computing device;
verifying authenticity of the configuration data using the received challenge code including generating a candidate verification value from a combination of the configuration data and the received challenge code, wherein the configuration data is deemed verified when the verification value received in the first communication matches the candidate verification value; and
when the configuration data is deemed verified, then providing the configuration data to the first mobile application.

9. The method of claim 8 wherein a second mobile application (124), different from the first mobile application (122), performs the steps of receiving a challenge code and verifying authenticity of the configuration data, wherein providing the configuration data to the first mobile application preferably includes the second mobile application communicating with the first mobile application, wherein providing the configuration data to the first mobile application preferably includes the second mobile application storing the configuration data in a data file that can be accessed by the first mobile application, wherein the first mobile application preferably performs the steps of receiving a challenge code and verifying authenticity of the configuration data, and when the configuration data is deemed verified then the first mobile application uses the configuration data to establish and conduct communications with a server.

10. The method of anyone of the preceding claims wherein the first communication comprises an email message (145) having an attachment, the attachment comprising the configuration data and the verification value.

11. The method of anyone of the preceding claims wherein the verification value in the first communication is a hash-based message authentication code (HMAC) produced by applying a secure hash function to a combination of the configuration data with the first challenge code.

12. The method of anyone of the preceding claims, wherein the configuration data is used by the first mobile application to establish and conduct communications with a server.

13. The method of anyone of the preceding claims, wherein the user receives the first challenge code over a communication path (144) different from a communication path over which the first communication is received.

14. A system (106) comprising:
a data processor; and
a data storage device (105) having stored thereon computer executable program code,
the computer executable program code, when executed by the data processor, causes the data processor to:
receive a first communication that includes configuration data for at least a first mobile application and a verification value, the verification value generated by applying a secure hash function to a combination of the configuration data and a first challenge code;
receive a challenge code from a user;
verify authenticity of the configuration data using the received challenge code by generating a candidate verification value by applying the secure hash function to a combination of the configuration data and the received challenge code, wherein the configuration data is deemed verified when the verification value received in the first communication matches the candidate verification value; and
when the configuration data is deemed verified, then provide the configuration data to the first mobile application.

15. The system of claim 14 wherein the computer executable program code is a second mobile application different from the first mobile application.

16. The system of claim 15 wherein the second mobile application communicates with the first mobile application to provide the configuration data to the first mobile application and/or wherein the second mobile application stores the configuration data in a data file that can be accessed by the first mobile application and/or
wherein the first mobile application comprises the computer executable program code and/or wherein the first communication comprises an email message having an attachment, the attachment comprising the configuration data and the verification value and/or wherein the verification value in the first communication is a hash-based message authentication code (HMAC) and/or wherein the configuration data is used by the first mobile application to establish and conduct communications with a server and/or wherein the user receives the first challenge code separately from receiving the first communication.

## Patentansprüche

1. Computerimplementiertes Verfahren zum Konfigurieren eines Anwendungsprogramms (122) einer mobilen Rechenvorrichtung (106), wobei das Verfahren Folgendes aufweist:
- Einrichten einer sicheren Netzwerkverbindung (144) zwischen der mobilen Rechenvorrichtung und einem Server-Computersystem (104),
- Authentifizieren eines Benutzers der mobilen Rechenvorrichtung gegenüber dem Server-Computersystem (104) über die sichere Netzwerkverbindung,
- Erhalten einer Konfigurationsanforderung von der mobilen Rechenvorrichtung über die sichere Netzwerkverbindung durch das Server-Computersystem, wobei die Konfigurationsanforderung Anzeichen für die Anforderung eines Benutzers (102) zum Konfigurieren des Anwendungsprogramms ist,
- als Reaktion auf die Konfigurationsanforderung:
• Erzeugen eines Aufforderungscodes (132) durch das Server-Computersystem,
• Senden des Aufforderungscodes über die sichere Netzwerkverbindung (144) zu der mobilen Rechenvorrichtung,
• Senden von Konfigurationsdaten (134) und einem Verifizierungswert (134a) von dem Server-Computersystem zu der mobilen Rechenvorrichtung über einen von der sicheren Netzwerkverbindung (144) verschiedenen Kommunikationskanal (145; 148),
wobei bei Erhalt der Konfigurationsdaten und des Verifizierungswerts die folgenden Schritte von der mobilen Rechenvorrichtung durchgeführt werden:
• Starten eines Konfigurationsprogrammmoduls,
• Auffordern des Benutzers durch das Konfigurationsprogrammmodul zur Eingabe des Aufforderungscodes über eine Benutzerschnittstelle (622),
- Verifizieren, als Reaktion auf die Eingabe des Aufforderungscodes durch den Benutzer, der Konfigurationsdaten unter Verwendung des vom Benutzer eingegebenen Aufforderungscodes und des von dem Konfigurationsprogramm über den Kommunikationskanal erhaltenen Verifizierungswertes,
- bei Verifikation der Konfigurationsdaten Konfigurieren des Anwendungsprogramms unter Verwendung der Konfigurationsdaten durch das Konfigurationsprogrammmodul.

2. Verfahren nach Anspruch 1, wobei die Konfigurationsdaten wenigstens einen Uniform Resource Locator eines zusätzlichen Server-Computersystems (142) und wahlweise eine Portnummer des zusätzlichen Server-Computersystems umfassen, wobei die folgenden zusätzlichen Schritte ausgeführt werden, nachdem die Konfiguration des Anwendungsprogramms durchgeführt worden ist:
- Einrichten einer zusätzlichen sicheren Netzwerkverbindung (150) zwischen der mobilen Rechenvorrichtung und dem zusätzlichen Server-Computersystem unter Verwendung der in den Konfigurationsdaten enthaltenen URL und wahlweisen Portnummer,
- Authentifizieren des Benutzers der mobilen Rechenvorrichtung gegenüber dem zusätzlichen Server-Computersystem,
- Einrichten einer Datenbankverbindung zwischen dem Anwendungsprogramm und der Datenbank (151) des zusätzlichen Server-Computersystems durch die zusätzliche sichere Netzwerkverbindung bei erfolgreicher Authentifizierung des Benutzers.

3. Verfahren nach Anspruch 1 oder 2, wobei das Server-Computersystem (104) eine Benutzerregistrierungsdatenbank (139) zum Speichern von Benutzerregistrierungsinformationen aufweist, wobei die Benutzerregistrierungsinformationen Referenzdaten zur Authentifizierung des Benutzers gegenüber dem Dienstcomputersystem und eine Adresse zur Einrichtung des zusätzlichen Kommunikationskanals (145) zum Senden der Konfigurationsdaten und des Verifizierungswertes an die mobile Rechenvorrichtung aufweist, wobei das Server-Computersystem als Reaktion auf die Konfigurationsanforderung und nach erfolgreicher Authentifizierung des Benutzers gegenüber dem Server-Computersystem die Adresse des Benutzers aus der Benutzerregistrierungsdatenbank abruft, woraufhin die Konfigurationsdaten und der Verifizierungswert über den zusätzlichen Kommunikationskanal an die Adresse des Benutzers gesendet werden.

4. Verfahren nach Anspruch 3, wobei die Adresse eine E-Mail-Adresse ist und die Konfigurationsdaten und der Verifizierungswert mittels einer E-Mail-Nachricht (145) vom Server-Computersystem an die mobile Rechenvorrichtung gesendet werden oder die Adresse eine Telefonnummer der mobilen Rechenvorrichtung ist, wobei die Konfigurationsdaten und der Verifizierungswert vom Server-Computersystem mittels einer SMS-Nachricht, wie z.B. einer binären SMS-Nachricht, an die mobile Rechenvorrichtung gesendet werden.

5. Verfahren nach einem der vorhergehenden Ansprüche 1, 2 oder 3, wobei das Senden des Aufforderungscodes über die sichere Netzwerkverbindung (144) an die mobile Rechenvorrichtung durch Senden einer SMS-Nachricht durchgeführt wird.

6. Verfahren nach einem der vorhergehenden Ansprüche, das ferner Folgendes aufweist:
- als Reaktion auf die Konfigurationsanforderung und nach erfolgreicher Authentifizierung:
• Abrufen der Konfigurationsdaten und des Verifizierungswertes durch das Server-Computersystem,
• Senden einer Antwort auf die Konfigurationsanforderung über die weitere sichere Netzwerkverbindung an das Browser-Programm (108) der mobilen Rechenvorrichtung, wobei die Antwort die Konfigurationsdaten und den Verifizierungswert und eine Weiterleitung zu einem das Konfigurationsprogrammmodul kennzeichnenden individuellen URL-Schema enthält,
• Ausführen der Weiterleitung durch das Browser-Programm, so dass das Konfigurationsprogrammmodul aufgerufen wird.

7. Verfahren nach einem der vorhergehenden Ansprüche, wobei die Konfigurationsdaten vom Server-Computersystem (104) unter Verwendung eines symmetrischen Schlüssels verschlüsselt werden, wobei der symmetrische Schlüssel der Aufforderungscode (132) ist oder der symmetrische Schlüssel vom Aufforderungscode abgeleitet wird, wobei nur die verschlüsselten Konfigurationsdaten über die sichere Netzwerkverbindung (144) übertragen werden und wobei die Konfigurationsdaten bei Eingabe des Aufforderungscodes (132') über die Eingabekomponente (622) der mobilen Rechenvorrichtung (106) von der mobilen Rechenvorrichtung verschlüsselt werden.

8. Verfahren nach einem der vorhergehenden Ansprüche, das die folgenden, an der mobilen Rechenvorrichtung durchgeführten Schritte aufweist:
Erhalten einer ersten Mitteilung (136), die Konfigurationsdaten (134) für wenigstens eine erste mobile Anwendung (122) und einen Verifizierungswert (134a) beinhaltet, wobei der Verifizierungswert aus einer Kombination der Konfigurationsdaten und eines ersten Aufforderungscodes erzeugt wird,
Erhalten eines Aufforderungscodes (132') von einem Benutzer der mobilen Rechenvorrichtung,
Verifizieren der Authentizität der Konfigurationsdaten unter Verwendung des erhaltenen Aufforderungscodes einschließlich Erzeugen eines Verifizierungswertkandidaten aus einer Kombination der Konfigurationsdaten und des erhaltenen Aufforderungscodes, wobei die Konfigurationsdaten als verifiziert gelten, wenn der in der ersten Mitteilung erhaltene Verifizierungswert mit dem Verifizierungswertkandidaten übereinstimmt, und,
wenn die Konfigurationsdaten als verifiziert gelten, dann Geben der Konfigurationsdaten an die erste mobile Anwendung.

9. Verfahren nach Anspruch 8, wobei eine zweite mobile Anwendung (124), die von der ersten mobilen Anwendung (122) verschieden ist, die Schritte des Erhaltens eines Aufforderungscodes und des Verifizierens der Authentizität der Konfigurationsdaten durchführt, wobei das Geben der Konfigurationsdaten an die erste mobile Anwendung vorzugsweise das Kommunizieren der zweiten mobilen Anwendung mit der ersten mobilen Anwendung beinhaltet, wobei das Geben der Konfigurationsdaten an die erste mobile Anwendung vorzugsweise das Speichern der Konfigurationsdaten durch die zweite mobile Anwendung in einer Datei, auf welche die erste mobile Anwendung zugreifen kann, beinhaltet, wobei die erste mobile Anwendung vorzugsweise die Schritte des Erhaltens eines Aufforderungscodes und Verifizierens der Authentizität der Konfigurationsdaten durchführt, und die erste mobile Anwendung, wenn die Konfigurationsdaten als verifiziert gelten, dann die Konfigurationsdaten zum Einrichten und Durchführen der Kommunikation mit einem Server verwendet.

10. Verfahren nach einem der vorhergehenden Ansprüche, wobei die erste Mitteilung eine E-Mail-Nachricht (145) aufweist, die einen Anhang hat, wobei der Anhang die Konfigurationsdaten und den Verifizierungswert aufweist.

11. Verfahren nach einem der vorhergehenden Ansprüche, wobei der Verifizierungswert in der ersten Mitteilung ein Hash-based Message Authentication Code (HMAC) ist, der durch Anwenden einer sicheren Hash-Funktion auf eine Kombination der Konfigurationsdaten mit dem ersten Aufforderungscode erzeugt wird.

12. Verfahren nach einem der vorhergehenden Ansprüche, wobei die Konfigurationsdaten von der ersten mobilen Anwendung zum Einrichten und Durchführen der Kommunikation mit einem Server verwendet werden.

13. Verfahren nach einem der vorhergehenden Ansprüche, wobei der Benutzer den ersten Aufforderungscode über einen Kommunikationsweg (144) erhält, der von einem Kommunikationsweg, über den die erste Mitteilung erhalten wird, verschieden ist.

14. System (106), umfassend:
einen Datenprozessor und
eine Datenspeichervorrichtung (105), in der computerausführbarer Programmcode gespeichert wird,
wobei der computerausführbare Programmcode, wenn vom Datenprozessor ausgeführt, den Datenprozessor veranlasst zum:
Erhalten einer ersten Mitteilung, die Konfigurationsdaten für wenigstens eine erste mobile Anwendung und einen Verifizierungswert beinhaltet, wobei der Verifizierungswert durch Anwenden einer sicheren Hash-Funktion auf eine Kombination der Konfigurationsdaten und eines ersten Aufforderungscodes erzeugt wird,
Erhalten eines Aufforderungscodes von einem Benutzer,
Verifizieren der Authentizität der Konfigurationsdaten unter Verwendung des erhaltenen Aufforderungscodes durch Erzeugen eines Verifizierungswertkandidaten durch Anwenden der sicheren Hash-Funktion auf eine Kombination der Konfigurationsdaten und des erhaltenen Aufforderungscodes, wobei die Konfigurationsdaten als verifiziert gelten, wenn der in der ersten Mitteilung erhaltene Verifizierungswert mit dem Verifizierungswertkandidaten übereinstimmt, und,
wenn die Konfigurationsdaten als verifiziert gelten, dann Geben der Konfigurationsdaten an die erste mobile Anwendung.

15. System nach Anspruch 14, wobei der computerausführbare Programmcode eine zweite mobile Anwendung ist, die von der ersten mobilen Anwendung verschieden ist.

16. System nach Anspruch 15, wobei die zweite mobile Anwendung mit der ersten mobilen Anwendung kommuniziert, um die Konfigurationsdaten an die erste mobile Anwendung zu geben und/oder wobei die zweite mobile Anwendung die Konfigurationsdaten in einer Datei speichert, auf welche die erste mobile Anwendung zugreifen kann, und/oder
wobei die erste mobile Anwendung den computerausführbaren Programmcode aufweist und/oder wobei die erste Mitteilung eine E-Mail-Nachricht aufweist, die einen Anhang hat, wobei der Anhang die Konfigurationsdaten und den Verifizierungswert aufweist, und/oder wobei der Verifizierungswert in der ersten Mitteilung ein Hash-based Message Authentication Code (HMAC) ist und/oder wobei die Konfigurationsdaten von der ersten mobilen Anwendung zum Einrichten und Durchführen der Kommunikation mit einem Server verwendet werden und/oder wobei der Benutzer den ersten Aufforderungscode vom Erhalten der ersten Mitteilung getrennt erhält.

## Revendications

1. Procédé mis en oeuvre par ordinateur, pour la configuration d'un programme d'application (122) d'un dispositif informatique mobile (106), le procédé comprenant :
- l'établissement d'une connexion réseau sécurisée (144) entre le dispositif informatique mobile et un système d'ordinateur serveur (104),
- l'authentification d'un utilisateur du dispositif informatique mobile auprès du système d'ordinateur serveur (104) par le biais de la connexion réseau sécurisée,
- la réception d'une demande de configuration par le biais de la connexion réseau sécurisée, de la part du dispositif informatique mobile, par le système d'ordinateur serveur, la demande de configuration indiquant une demande d'utilisateur (102) pour la configuration du programme d'application,
- en réponse à la demande de configuration :
• génération d'un code challenge (132) par le système d'ordinateur serveur,
• envoi du code challenge au dispositif informatique mobile par le biais de la connexion réseau sécurisée (144),
• envoi de données de configuration (134) et d'une valeur de vérification (134a), depuis le système d'ordinateur serveur au dispositif informatique mobile, par le biais d'un canal de communication (145 ; 148) différent de la connexion réseau sécurisée (144),
dans lequel les étapes suivantes sont exécutées par le dispositif informatique mobile, à réception des données de configuration et de la valeur de vérification :
• démarrage d'un module de programme de configuration,
• invitation de l'utilisateur à saisir le code challenge par le biais d'une interface d'utilisateur (622), par le module de programme de configuration,
- en réponse à la saisie du code challenge par l'utilisateur, vérification des données de configuration à l'aide du code challenge saisi par l'utilisateur et de la valeur de vérification reçue par le biais du canal de communication, par le programme de configuration,
- lors de la vérification des données de configuration, configuration du programme d'application à l'aide des données de configuration, par le module de programme de configuration.

2. Procédé selon la revendication 1, dans lequel les données de configuration comprennent au moins un localisateur uniforme de ressources d'un système d'ordinateur serveur supplémentaire (142), et éventuellement un numéro de port du système d'ordinateur serveur supplémentaire, dans lequel les étapes supplémentaires suivantes sont exécutées une fois que le programme d'application a été mis en oeuvre :
- établissement d'une connexion réseau sécurisée supplémentaire (150) entre le dispositif informatique mobile et le système d'ordinateur serveur supplémentaire, à l'aide de l'URL et du numéro de port facultatif contenus dans les données de configuration,
- authentification de l'utilisateur du dispositif informatique mobile auprès de l'ordinateur serveur supplémentaire,
- établissement d'une connexion de bases de données entre le programme d'application et une base de données (151) du système d'ordinateur serveur supplémentaire, par la connexion réseau sécurisée supplémentaire, suite à l'authentification réussie de l'utilisateur.

3. Procédé selon la revendication 1 ou 2, dans lequel le système d'ordinateur serveur (104) comprend une base de données d'inscription d'utilisateurs (139) pour le stockage d'informations d'inscription d'utilisateur, les informations d'inscription d'utilisateur comprenant des données de référence pour l'authentification de l'utilisateur auprès du système d'ordinateur serveur, et une adresse pour l'établissement du canal de communication supplémentaire (145), afin d'envoyer les données de configuration et la valeur de vérification au dispositif informatique mobile, dans lequel, en réponse à la demande de configuration et suite à l'authentification réussie de l'utilisateur auprès du système d'ordinateur serveur, le système d'ordinateur serveur extrait l'adresse de l'utilisateur à partir de la base de données d'inscription d'utilisateur, suite à quoi les données de configuration et la valeur de vérification sont envoyées à l'adresse de l'utilisateur par le biais du canal de communication supplémentaire.

4. Procédé selon la revendication 3, dans lequel l'adresse est une adresse électronique et les données de configuration et la valeur de vérification sont envoyées depuis le système d'ordinateur serveur au dispositif informatique mobile au moyen du message électronique (145), ou dans lequel l'adresse est un numéro de téléphone du dispositif informatique mobile, les données de configuration et la valeur de vérification étant envoyées depuis le système d'ordinateur serveur au dispositif informatique mobile au moyen d'un message SMS, tel qu'un message SMS binaire.

5. Procédé selon l'une quelconque des revendications précédentes 1, 2 ou 3, dans lequel l'envoi du code challenge au dispositif informatique mobile par le biais de la connexion réseau sécurisée (144) est effectué en envoyant un message SMS.

6. Procédé selon l'une quelconque des revendications précédentes, comprenant en outre :
- en réponse à la demande de configuration et suite à l'authentification réussie :
• extraction des données de configuration et de la valeur de vérification par le système d'ordinateur serveur,
• envoi d'une réponse à la demande de configuration au programme de navigation (108) du dispositif informatique mobile, par le biais de la connexion réseau sécurisée supplémentaire, la réponse contenant les données de configuration et la valeur de vérification, ainsi qu'un renvoi vers un schéma d'URL personnalisé identifiant le module de programme de configuration,
• le programme de navigation exécutant le renvoi de manière à invoquer le module de programme de configuration.

7. Procédé selon l'une quelconque des revendications précédentes, dans lequel les données de configuration sont cryptées par le système d'ordinateur serveur (104) à l'aide d'une clé symétrique, la clé symétrique étant le code challenge (132) ou la clé symétrique étant dérivée du code challenge, dans lequel seules les données de configuration cryptées sont transmises par le biais de la connexion réseau sécurisée (144) et dans lequel les données de configuration sont décryptées par le dispositif informatique mobile lors de la saisie du code challenge (132') par le biais du composant de saisie (622) du dispositif informatique mobile (106).

8. Procédé selon l'une quelconque des revendications précédentes, comprenant les étapes suivantes, mises en oeuvre sur le dispositif informatique mobile :
réception d'une première communication (136) comprenant des données de configuration (134) pour au moins une première application mobile (122) et une valeur de vérification (134a), la valeur de vérification étant générée à partir d'une combinaison entre les données de configuration et un premier code challenge ;
réception d'un code challenge (132') provenant d'un utilisateur du dispositif informatique mobile ;
vérification de l'authenticité des données de configuration à l'aide du code challenge reçu, y compris la génération d'une valeur de vérification candidate à partir d'une combinaison entre les données de configuration et le code challenge reçu, les données de configuration étant considérées comme vérifiées lorsque la valeur de vérification reçue dans la première communication correspond à la valeur de vérification candidate ; et
lorsque les données de configuration sont considérées comme vérifiées, transmission des données de configuration à la première application mobile.

9. Procédé selon la revendication 8, dans lequel une deuxième application mobile (124) différente de la première application mobile (122) exécute les étapes de réception d'un code challenge et de vérification de l'authenticité des données de configuration, dans lequel la transmission des données de configuration à la première application mobile comprend de préférence la communication de la deuxième application mobile avec la première application mobile, dans lequel la transmission des données de configuration à la première application mobile comprend de préférence le stockage des données de configuration par la deuxième application mobile dans un fichier de données accessible à la première application mobile, dans lequel la première application mobile exécute de préférence les étapes de réception d'un code challenge et de vérification de l'authenticité des données de configuration, et dans lequel, lorsque les données de configuration sont considérées comme vérifiées, la première application mobile utilise les données de configuration pour établir et mener des communications avec un serveur.

10. Procédé selon l'une quelconque des revendications précédentes, dans lequel la première communication comprend un message électronique (145) présentant une pièce jointe, la pièce jointe comprenant les données de configuration et la valeur de vérification.

11. Procédé selon l'une quelconque des revendications précédentes, dans lequel la valeur de vérification dans la première communication est un code d'authentification de message haché (HMAC) produit en appliquant une fonction de hachage sécurisée à une combinaison entre les données de configuration et le premier code challenge.

12. Procédé selon l'une quelconque des revendications précédentes, dans lequel les données de configuration sont utilisées par la première application mobile pour établir et mener des communications avec un serveur.

13. Procédé selon l'une quelconque des revendications précédentes, dans lequel l'utilisateur reçoit le premier code challenge par le biais d'une voie de communication (144) différente d'une voie de communication par le biais de laquelle la première communication est reçue.

14. Système (106) comprenant :
un processeur de données ; et
un dispositif de stockage de données (105) dans lequel est stocké un code de programme exécutable par ordinateur,
dans lequel, lorsqu'il est exécuté par le processeur de données, le code de programme exécutable par ordinateur amène le processeur de données à :
recevoir une première communication comprenant des données de configuration pour au moins une première application mobile et une valeur de vérification, la valeur de vérification étant générée en appliquant une fonction de hachage sécurisée à une combinaison entre les données de configuration et un premier code challenge ;
recevoir un code challenge de la part d'un utilisateur ;
vérifier l'authenticité des données de configuration à l'aide du code challenge reçu, en générant une valeur de vérification candidate par application de la fonction de hachage sécurisée à une combinaison entre les données de configuration et le code challenge reçu, les données de configuration étant considérées comme vérifiées lorsque la valeur de vérification reçue dans la première communication correspond à la valeur de vérification candidate ; et
lorsque les données de configuration sont considérées comme vérifiées, transmission des données de configuration à la première application mobile.

15. Système selon la revendication 14, dans lequel le code de programme exécutable par ordinateur est une deuxième application mobile différente de la première application mobile.

16. Système selon la revendication 15, dans lequel la deuxième application mobile communique avec la première application mobile pour fournir les données de configuration à la première application mobile, et/ou dans lequel la deuxième application mobile stocke les données de configuration dans un fichier de données accessible à la première application mobile, et/ou
dans lequel la première application mobile comprend le code de programme exécutable par ordinateur, et/ou dans lequel la première communication comprend un message électronique présentant une pièce jointe, la pièce jointe comprenant les données de configuration et la valeur de vérification, et/ou dans lequel la valeur de vérification dans la première communication est un code d'authentification de message haché (HMAC), et/ou dans lequel les données de configuration sont utilisées par la première application mobile pour établir et mener des communications avec un serveur, et/ou dans lequel l'utilisateur reçoit le premier code challenge séparément de la réception de la première communication.
